# DEMANDE DE BREVET EUROPEEN

(11) **EP 4 068 317 A1**
(43) Date de publication de la demande: **05.10.2022**
(21) Numéro de dépôt: 22165062.5
(22) Date de dépôt: 29.03.2022
(51) Int. Cl.: H01F 41/02, H01F 1/057, B22F 10/00

(54) **POUDRES NON CONVENTIONNELLES, LEUR PROCEDE D OBTENTION ET LEURS UTILISATIONS POUR LA PREPARATION D AIMANTS A BASE DE TERRES RARES**

(30) Priorité: 02.04.2021 FR 2103452
(71) Demandeur: Commissariat à l'énergie atomique et aux énergies alternatives, 75015 Paris (FR)
(72) Inventeur: TOSONI, Olivier, 38054 Grenoble cedex 09 (FR); CANIOU, Romain, 38054 Grenoble cedex 09 (FR); GAILLARD, Gilles, 38054 Grenoble cedex 09 (FR); GARANDET, Jean-Paul, 38054 Grenoble cedex 09 (FR); RADO, Cyril, 38054 Grenoble cedex 09 (FR)
(74) Mandataire: Gevers & Orès

(57) **Abrégé**

La présente invention concerne des poudres non conventionnelles, notamment adaptées aux procédés de fabrication additive, ainsi que leur procédé d'obtention. L'invention vise également l'utilisation desdites poudres pour la préparation d'aimants à base de terres rares par fabrication additive, les procédés de préparation d'aimants à base de terres rares par fabrication additive à partir desdites poudres, et les aimants permanents à base de terres rares ainsi obtenus.

## Description

La présente invention concerne des poudres non conventionnelles, notamment adaptées aux procédés de fabrication additive, ainsi que leur procédé d'obtention. L'invention vise également l'utilisation desdites poudres pour la préparation d'aimants à base de terres rares par fabrication additive, les procédés de préparation d'aimants à base de terres rares par fabrication additive à partir desdites poudres, et les aimants permanents à base de terres rares ainsi obtenus.

Les aimants permanents à base de terres rares, notamment les aimants au néodyme (par exemple NdFeB), sont les plus performants actuellement connus, car ils présentent une forte aimantation rémanente Bᵣ (typiquement 1.3T), et un produit énergétique (BH)ₘₐₓ très élevé (de l'ordre de 400 kJ/m³), ainsi qu'une excellente coercitivité intrinsèque R_{cj}, qui quantifie la résistance à un champ démagnétisant (typiquement 2T / 1600kA/m).

Ces qualités rendent lesdits aimants permanents particulièrement intéressants pour des applications dans des secteurs de pointe en électronique, en électrotechnique, en mécanique (par exemple pour réduire le volume et le poids des moteurs et générateurs électriques), notamment dans l'industrie automobile, par exemple pour réaliser des contacteurs, des moteurs ou des alternateurs, dans le diagnostic médical, par exemple, pour l'imagerie par résonance magnétique.

Classiquement, les aimants permanents sont mis en forme par pressage sous champ magnétique. Ce procédé consiste à insérer de la poudre et un lubrifiant, dans une matrice et à la compacter, en présence d'un champ magnétique, permettant d'orienter les grains de poudre dans une même direction cristallographique. Une étape de frittage est ensuite réalisée, par exemple dans un four.

Cependant, ce procédé de fabrication ne permet pas l'obtention d'aimants aux formes complexes et/ou variées.

Au contraire, et de façon générale, les procédés de fabrication additive basés sur l'utilisation de lits de poudres, de type fusion sur lit de poudre ou de type projection de liant sur lit de poudre, permettent de réaliser des pièces de grande complexité. Ces procédés connaissent actuellement un développement très marqué, pour de nombreuses classes de métaux (alliages base Fe, Ni, Al, Ti...) et de nombreux domaines applicatifs (aéronautique, médical, énergie...). Un autre avantage des procédés de fabrication additive est de limiter la perte de matière rencontrée dans les procédés classiques de type usinage.

Toutefois, les poudres d'alliage à base de terres rares de l'art antérieur, utilisées dans la cadre de la préparation d'aimants permanents frittés, ne permettent pas l'obtention d'aimants à partir des procédés connus de fabrication additive sur lesdites poudres.

Il existe des poudres, obtenues par la technique d'atomisation au gaz, qui peuvent être utilisées pour une fabrication additive.

Cependant, le besoin, dans cette technique, de fondre un métal liquide dans un creuset induit nécessairement une pollution du liquide, surtout pour les métaux à haut point de fusion qui sont souvent très réactifs. Par ailleurs, les besoins pour de nombreuses applications portent sur des poudres de diamètre inférieur à 50 µm, et sauf à utiliser des jets de gaz très puissants, une fraction importante de poudres aura un diamètre significativement supérieur à 50 µm. Enfin, même si le procédé se déroule sous atmosphère protectrice, un risque d'oxydation (là encore principalement pour les métaux réactifs) n'est pas à exclure. En particulier pour le procédé d'atomisation à l'eau, les teneurs en oxygène de la poudre sont généralement élevées.

De plus, les aimants obtenus à partir de ces poudres ont des propriétés magnétiques très inférieures à celles des aimants frittés commerciaux.

L'invention a donc pour but la fourniture de poudres non conventionnelles adaptées aux procédés de fabrication additive.

Un autre but de l'invention est la mise à disposition d'un procédé de fabrication additive permettant l'obtention d'aimants permanents à partir de ces poudres non conventionnelles, notamment au sein des installations, en particulier industrielles, généralement utilisées pour la préparation des poudres destinées à l'obtention des aimants frittés.

Encore un autre but de l'invention est la fourniture d'aimants aux formes complexes et/ou variées ayant des propriétés physiques (rémanence, coercivité) s'approchant autant que possible de celles des aimants frittés.

Ainsi, selon un premier aspect, l'invention concerne une poudre d'un alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
ladite poudre ayant une taille de particule représentée par un d₅₀ compris de 20 à 100 µm. Selon un mode de réalisation particulier, la poudre de l'invention a une taille de particule représentée par un d₅₀ compris entre 30 et 60 µm, plus particulièrement entre 30 et 50 µm. Selon un mode de réalisation particulier, la poudre de l'invention a une dispersion granulométrique d₉₀/d₁₀ comprise entre 2 et 20, préférentiellement entre 2 et 10, encore plus préférentiellement entre 2 et 5.

Selon un mode de réalisation particulier, le rapport d'aspect médian de la poudre de l'invention est compris entre 0,5 et 1.

Selon un mode de réalisation particulier, la poudre de l'invention a une solidité médiane comprise entre 0,5 et 1.

Selon un mode de réalisation particulier, la poudre de l'invention a un indice de Hausner (HR) compris entre 1,2 et 1,6.

Selon un mode de réalisation particulier, la poudre de l'invention a un angle d'avalanche compris entre 45° et 65°.

Par « d₅₀ », on entend notamment la taille de particule telle que la moitié en volume des particules constitutives de la poudre soient de taille supérieure à d₅₀.

Par « d₉₀ », on entend notamment la taille de particule telle que 10% en volume des particules constitutives de la poudre soient de taille supérieure à d₉₀.

Par « d₁₀ », on entend notamment la taille de particule telle que 10% en volume des particules constitutives de la poudre soient de taille inférieure à d₁₀.

Ces caractéristiques de la poudre sont en particulier mesurées au moyen d'un granulomètre laser. L'appareil mesure le profil de diffraction engendré par le passage des particules en suspension dans un gaz au travers d'un laser, et obtient, par une transformation mathématique reposant sur la théorie de la diffraction de Mie, la distribution granulométrique et la concentration volumique de la particule en question dans le gaz.

Par « aspect médian », on entend notamment le rapport entre la plus petite longueur et la plus grande longueur d'une particule de poudre, moyenné sur a minima 50 000 particules, ces longueurs étant en particulier mesurées par morphogranulométrie. Cette technique, bien connue de l'homme du métier, permet l'analyse automatique, par un microscope optique couplé avec un programme adéquat, de plusieurs dizaines de milliers de particules préalablement étalées sur un support grâce à une impulsion gazeuse.

Par « solidité médiane », on entend notamment le rapport entre l'aire réelle d'une particule et l'aire de Hull, qui correspond à l'aire délimitée par un élastique imaginaire placée autour de ladite particule, ce rapport étant moyenné sur a minima 50 000 particules.

Les mesures des valeurs de d₅₀, d₉₀ et d₁₀, d'aspect et de solidité médiane sont en particulier réalisées par morphogranulométrie. L'appareil utilisé est par exemple un morphogranulomètre Morphologi G3 Malvern. Pour réaliser une mesure, la poudre à mesurer est premièrement dispersée par un jet de gaz neutre (azote ou argon) à la surface d'une plaque de verre transparente. Ensuite chaque particule est photographiée à un grossissement adapté à sa taille puis analysée informatiquement.

Par « indice de Hausner (HR) », on entend notamment le ratio entre la densité tapée et la densité apparente.

La densité apparente est notamment mesurée en plaçant une masse connue de poudre dans une éprouvette graduée. La division de la masse de poudre par le volume de celle-ci permet l'obtention de la densité apparente d'une poudre. La densité tapée d'une poudre est notamment mesurée en plaçant une masse connue de poudre dans une éprouvette graduée. Cette éprouvette est ensuite tapée 1000 fois par un appareil normé (par exemple Autotap Autotap de la marque Anton Paar) et le volume final est mesuré. La division de la masse de poudre par le volume occupé par celle-ci après tapage permet l'obtention de la densité tapée. L'angle d'avalanche est notamment mesuré au moyen d'un tambour rotatif.

La mesure de l'angle d'avalanche se fait par exemple au moyen d'un tambour rotatif REVOLUTION Powder Analyzer.

Lors de la rotation du tambour, une avalanche de poudre se déclenche et l'angle d'avalanche est ainsi mesuré. La valeur donnée de l'angle d'avalanche est par exemple moyennée sur 150 avalanches.

Selon un mode de réalisation particulier, l'alliage est constitué de ou comprenant, les pourcentages étant en masse par rapport à la masse totale d'alliage :
- entre 27% et 35% de deux terres rares étant Nd et Pr, et éventuellement d'au moins une autre terre rare choisie dans le groupe constitué de Ce, La, Dy, Tb, Gd et Ho ; et/ou
- moins de 3% d'au moins deux premiers éléments d'addition choisis dans le groupe constitué de Co, Cu, Ga, et Al.

Selon un mode de réalisation particulier, le premier élément d'addition est compris dans l'alliage à raison de 0,2% ou plus, et moins de 3% par rapport à la masse totale d'alliage.

Selon un autre aspect, l'invention concerne un procédé de préparation d'une poudre d'un alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
ladite poudre ayant une taille de particule représentée par un d₅₀ compris de 20 à 100 µm, ledit procédé consistant en ou comprenant les étapes suivantes :
(i) Préparation de rubans d'alliage trempés, par trempe, en particulier par trempe sur roue, d'un alliage fondu coulé en ruban, ledit alliage étant tel que défini ci-dessus ;
(ii) Optionnellement, traitement thermique sous vide à une température comprise entre 1000°C et 1100°C pendant une durée comprise entre 1h et 10h, pour obtenir un alliage recuit ;
(iii) Optionnellement, décrépitation sous hydrogène du ruban d'alliage trempé obtenu à l'issue de l'étape (i), ou le cas échéant de l'alliage recuit obtenu à l'issue de l'étape (ii) par maintien du ruban à une température comprise entre 10 et 500°C, en particulier entre 200 et 500°C, sous vide primaire ou secondaire, puis mise en contact, à cette température, dudit ruban avec une atmosphère d'hydrogène, pour obtenir une poudre grossière d'alliage ;
(iv) Broyage du ruban d'alliage trempé obtenu à l'issue de l'étape (i), ou le cas échéant de l'alliage recuit obtenu à l'issue de l'étape (ii), ou le cas échéant de la poudre grossière d'alliage obtenue à l'issue de l'étape (iii), pour obtenir une poudre fine ayant une taille de particule représentée par un d₅₀ compris de 20 à 100 µm.

L'étape (ii) est susceptible de permettre, si nécessaire, de faire grossir les grains d'alliage obtenus de manière à faciliter le broyage à la granulométrie visée.

Tous les modes de réalisation mentionnés ci-dessus quant aux poudres de l'invention peuvent également s'appliquer ici, seuls ou en combinaison.

Selon un mode de réalisation particulier, l'épaisseur du ruban obtenu à l'issue de l'étape (i) est comprise entre 0,2 et 1 mm.

Selon un mode de réalisation particulier, l'invention concerne un procédé tel que défini précédemment, dans lequel, dans l'étape (i), l'alliage est fondu par induction, par exemple dans un creuset.

Selon un mode de réalisation particulier, l'invention concerne un procédé tel que défini précédemment, dans lequel, dans l'étape (i), l'alliage est fondu à une température comprise entre 1350°C et 1550°C, de préférence entre 1400°C et 1500°C.

Selon un mode de réalisation particulier, l'invention concerne un procédé tel que défini précédemment, dans lequel, dans l'étape (i), la roue tourne à une vitesse comprise entre 10 et 120 tours/minute.

Selon un mode de réalisation particulier, l'étape (i) se fait sous une pression partielle de gaz inerte, en particulier d'argon, comprise entre 100 et 800 mbar.

Selon un mode de réalisation particulier, les rubans refroidissent lors de la trempe de l'étape (i) à une vitesse de refroidissement comprise entre 10³ °C/s et 10⁷ °C/s, en particulier entre 10³°C/s et 10⁵°C/s.

Selon un mode de réalisation particulier, les rubans d'alliage trempés obtenus à l'issue de l'étape (i) ont une teneur en oxygène comprise entre 200 et 500 ppm.

Selon un mode de réalisation particulier, l'invention concerne un procédé tel que défini précédemment, dans lequel, dans l'étape (iii), l'atmosphère d'hydrogène a une pression comprise entre 100mbar et 3bars.

Selon un mode de réalisation particulier, la température de chauffage des rubans est comprise de 200°C à 500°C.

Selon un mode de réalisation particulier, la mise en contact de l'étape (iii) avec l'atmosphère d'hydrogène se fait pendant une durée comprise entre 1h et 5h.

Selon un mode de réalisation particulier, le vide défini relativement à l'étape (iii) est inférieur à 1 mbar, de préférence inférieur à 0,1 mbar.

Selon un mode de réalisation particulier, le vide défini relativement à l'étape (iii) est maintenu pendant une durée de 30 minutes à 3 heures.

Selon un mode de réalisation particulier, l'étape (iii) est suivie, et ce avant l'étape (iv), d'une étape de désorption de l'hydrogène, en particulier sous vide primaire et/ou à environ 500°C. Selon un mode de réalisation particulier, la poudre grossière d'alliage a une taille de particule représentée par un d₅₀ compris entre 20 et 100 µm.

Selon un mode de réalisation particulier, le broyage de l'étape (iv) se fait par broyage à jet de gaz, le gaz étant de préférence un gaz inerte, notamment de l'hélium, de l'argon ou de l'azote.

Selon un mode de réalisation particulier, la pression d'entrée du gaz dans le broyeur à jet de gaz est inférieure à 10 bar, de préférence inférieure à 5 bar, plus particulièrement inférieure à 3 bar, et notamment supérieure ou égale à 1 ou 2 bar.

Selon un mode de réalisation particulier, le broyage de l'étape (iv) se fait à une vitesse comprise entre 1 et 5 kg par heure, de ruban d'alliage trempé obtenu à l'issue de l'étape (i), ou le cas échéant de l'alliage recuit obtenu à l'issue de l'étape (ii), ou le cas échéant de la poudre grossière d'alliage obtenue à l'issue de l'étape (iii), par heure.

Selon un mode de réalisation particulier, le broyage de l'étape (iv) est réalisé en présence d'un lubrifiant, en particulier d'un lubrifiant liquide constitué de ou comprenant au moins un alkyle à chaîne linéaire ou branchée, notamment à hauteur de 100 à 500 ppm en masse.

Selon un mode de réalisation particulier, l'étape (iv) de broyage est la dernière étape broyage. Ainsi, dans ce cas, l'étape (iv) est l'étape finale du procédé selon l'invention, de sorte que la taille des particules obtenues à l'issue de ce procédé est la taille des particules obtenues à l'issue de l'étape (iv).

Selon un autre aspect, la présente invention concerne une poudre susceptible d'être obtenue par le procédé tel que défini précédemment.

Selon un autre aspect, la présente invention concerne l'utilisation d'une poudre telle que définie précédemment pour la fabrication d'un aimant, en particulier par fabrication additive. Selon un autre aspect, la présente invention concerne un aimant permanent réalisé par un procédé d'impression 3D à partir d'une poudre telle que définie précédemment, comprenant ou constitué de grains cristallographiques d'alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
caractérisé en ce que les grains cristallographiques dudit aimant permanent ont une taille comprise entre 2 et 100 µm.

Selon une mode de réalisation particulier, l'aimant a une coercivité supérieure à 500 kA.m⁻¹ et une rémanence supérieure à 0,5T.

La mesure desdits grains cristallographiques peut par exemple se faire :
- en photographiant l'aimant après l'avoir placé sous un métalloscope laser à une puissance de grossissement de 2000, dans lequel une surface de détection est parallèle au bord inférieur du champ de vision lors de la prise de la photographie,
- en traçant une ligne droite d'une longueur de 146,5 µm à la position centrale du champ de vision ; et
- en comptant le nombre de cristaux de la phase principale en suivant la ligne droite pour déterminer le diamètre moyen des grains cristallographiques de l'aimant.

Selon un autre aspect, l'invention concerne un procédé de préparation par fabrication additive d'un aimant permanent à partir d'une poudre d'un alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
ladite poudre ayant une taille de particule représentée par un d₅₀ compris de 20 à 100 µm ledit procédé comprenant :
a) une étape de fabrication additive à partir de ladite poudre ; et
b) une étape de recuit, notamment à une température de 600 à 1100°C, en particulier pendant une durée de 1 à 10 heures, et de préférence sous pression réduite, par exemple sous vide secondaire ;
ledit aimant ayant une taille de grains cristallographiques comprise entre 2 et 100 µm.

Selon un mode de réalisation particulier, l'étape de fabrication additive est une étape de fusion laser sur lit de ladite poudre ou par projection de liant sur lit de ladite poudre.

Selon un mode de réalisation particulier, la poudre est étalée à l'aide d'une racle ou d'un rouleau pour former un lit de ladite poudre.

Selon un mode de réalisation particulier, le lit a une épaisseur comprise entre 10 et 70 µm, de préférence entre 20 et 50 µm.

Selon un mode de réalisation particulier, le laser est utilisé à une puissance comprise entre 75 et 500 W, et/ou à une vitesse de déplacement comprise entre 300 et 2000 mm/s.

Selon un autre mode de réalisation particulier, l'étape de fabrication additive est une étape de dépôt de matière sous énergie concentrée.

Selon un autre aspect, l'invention concerne un aimant susceptible d'être obtenu par le procédé tel que défini précédemment.

### Définitions

Au sens de la présente description, les pourcentages se réfèrent à des pourcentages en masse par rapport à la masse totale de la formulation, sauf indication contraire.

Tel qu'on l'entend ici, les plages de valeur sous forme de « x-y » ou « de x à y » ou « (compris) entre x et y » incluent notamment les bornes x et y.

Par « vide primaire », on entend notamment une pression comprise de 1 mbar à 10⁻³ mbar. Par « vide secondaire », on entend notamment une pression comprise de 10⁻³ mbar à 10⁻⁸ mbar.

### FIGURES

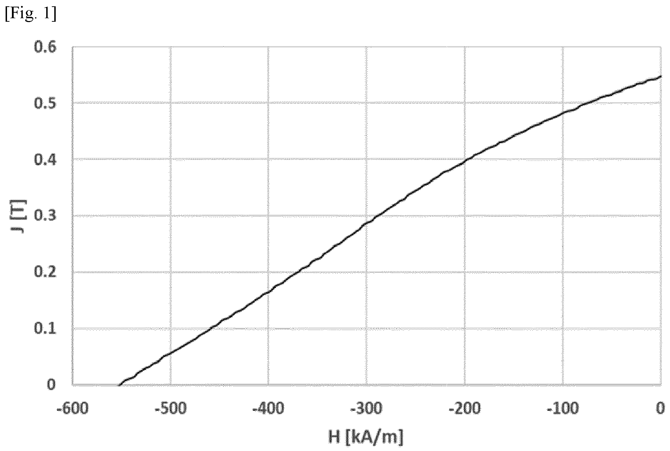

[Fig.1] La figure 1 présente la courbe de désaimantation d'un aimant imprimé selon la présente invention à partir d'une poudre selon l'invention, tel que décrit dans l'exemple 2.

### EXEMPLES

### Exemple 1 : Préparation d'une poudre d'alliage de composition (Nd₇₅Pr₂₅)₂₈Dy₄B₁Co_{0.95}Al_{0.15}Cu_{0.1}Ga_{0.2}Fe_{bal} selon l'invention

Un alliage de composition (Nd₇₅Pr₂₅)₂₈Dy₄B₁Co_{0.95}Al_{0.15}Cu_{0.1}Ga_{0.2}Fe_{bal} (proportions en pourcentages massiques) a été synthétisé dans un four de strip casting (trempe sur roue) semi-industriel. Les 16 kg de matériaux solides ont été fondus par induction sous une pression partielle d'argon de 280 mbar et ont été portés à une température de 1450°C, maintenus 5 minutes à cette température pour homogénéiser le bain liquide, puis l'alliage a été coulé sur une roue en cuivre de 60 cm de diamètre refroidie à 20°C et tournant à une vitesse de 30 tours/minute, avant d'être recueilli dans un bac lui aussi refroidi à 20°C. Cet alliage sous forme de rubans a ensuite subi un concassage mécanique avant d'être broyé dans un broyeur à jet de gaz (jet mill). Le gaz de broyage (azote) pénètre dans la chambre de broyage par 3 buses de 3 mm de diamètre intérieur à une pression de 4 bars, tandis que le matériau à broyer est alimenté au rythme de 1kg/h environ au moyen d'une trémie vibrante. La sélection de la granulométrie de la poudre sortante est réalisée au moyen d'un sélecteur rotatif tournant à une vitesse de 2000 à 3000 tours/minute, cette vitesse étant adaptée de manière asservie à la mesure de granulométrie réalisée en ligne sur le broyeur pour viser une valeur d₅₀ de 35 microns environ. La poudre a ensuite été tamisée avec un maillage de 50µm pour enlever la fraction supérieure granulométrique supérieure, avec un rendement supérieur à 95%.

La poudre obtenue est caractérisée par un d₅₀ de 39 µm. La dispersion de la granulométrie (d₉₀ / d₁₀) vaut 10.4. Le rapport d'aspect médian des particules est de 0.61 et la solidité médiane est égale à 0.74. La mesure de l'angle d'avalanche rapporte une valeur de 57.5°. L'indice de Hausner (HR) est égal à 1.4.

### Exemple 2 : Préparation d'un aimant par fabrication additive sur une poudre de l'invention

La poudre obtenue à l'issue de l'exemple 1 a été mise en œuvre par fusion laser sur lit de poudre. Lors de ce procédé, la poudre est déposée sur le plateau de construction manuellement. Ensuite, celle-ci est étalée par la machine à l'aide d'une racle d'abord, puis d'un rouleau. L'étalement est contrôlé pour avoir une épaisseur de 30µm. Un laser vient réaliser une fusion de la poudre en se déplaçant à la surface de la poudre en réalisant les géométries enregistrées dans la machine. Les paramètres du laser sont utilisés sont une puissance de 150 W, une vitesse de déplacement de 750 mm/s et un espace vecteur de 70µm. Avec ces paramètres machine et cette poudre, un total de 7 cylindres d'un diamètre de 10 mm ont été réalisés. D'une épaisseur allant de 1 mm (1 pièce) à 10mm (1pièce) en passant par 4mm (5 pièces), les pièces sont denses (99 ± 1%, densité mesurée par la méthode d'Archimède) et manipulables. Les résultats obtenus avec cette poudre et ces paramètres machines sont reproductibles. Les pièces ont ensuite été traitées à 1000°C sous vide secondaire pendant 2h, puis aimantées avec un champ pulsé de 6T avant que leurs propriétés magnétiques soient mesurées en circuit fermé (hystérésigraphe).

L'association d'une poudre selon l'invention et d'un procédé de fabrication selon l'invention permet la fabrication de pièces avec des propriétés magnétiques dures intéressantes : coercivité de 550 kA/m et rémanence égale à 0.54 T (Figure 1).

### Exemple 3 : Préparation d'une poudre d'alliage de composition (Nd₇₅Pr₂₅)_{30.7}Dy_{0.5}B₁Co_{0.94}Al_{0.19}Cu_{0.1}Ga_{0.16}Ti_{0.05}Fe_{bal} selon l'invention

Un alliage de composition (Nd₇₅PF₂₅)_{30.7}Dy_{0.5}B₁Co_{0.94}Al_{0.19}Cu_{0.1}Ga_{0.16}Ti_{0.05}Fe_{bal} (proportions en pourcentages massiques) a été synthétisé dans un four de strip casting (trempe sur roue) semi-industriel. Les 25 kg de matériaux solides ont été fondus par induction sous une pression partielle d'argon de 280 mbar et ont été portés à une température de 1450°C, maintenus 5 minutes à cette température pour homogénéiser le bain liquide, puis l'alliage a été coulé sur une roue en cuivre de 60 cm de diamètre refroidie à 20°C et tournant à une vitesse de 43 tours/minute, avant d'être recueilli dans un bac lui aussi refroidi à 20°C. Cet alliage sous forme de rubans a ensuite subi un recuit à 1050°C sous vide pendant 2h, suivi d'une étape d'hydruration sous 800 mbars d'hydrogène à 500°C, puis d'une déshydruration sous vide primaire à 500°C également, avant d'être broyé dans un broyeur à jet de gaz (jet mill). Le gaz de broyage (azote) pénètre dans la chambre de broyage par 3 buses de 3 mm de diamètre intérieur à une pression de 4 bars, tandis que le matériau à broyer est alimenté au rythme de 3kg/h environ au moyen d'une trémie vibrante. La sélection de la granulométrie de la poudre sortante est réalisée au moyen d'un sélecteur rotatif tournant à une vitesse de 1000 à 1500 tours/minute, cette vitesse étant adaptée de manière asservie à la mesure de granulométrie réalisée en ligne sur le broyeur pour viser une valeur d₅₀ de 40 microns environ.

La poudre obtenue est caractérisée par un d₅₀ de 40 µm. La dispersion de la granulométrie (d₉₀ / d₁₀) vaut 3.5. La mesure de l'angle d'avalanche rapporte une valeur de 54°. L'indice de Hausner (HR) est égal à 1.45.

## Revendications

1. Poudre d'un alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
ladite poudre ayant une taille de particule représentée par un d₅₀ compris de 20 à 100 µm.

2. Poudre selon la revendication 1, ayant une taille de particule représentée par un d₅₀ compris entre 30 et 60 µm, plus particulièrement entre 30 et 50 µm.

3. Poudre selon l'une quelconque des revendications précédentes, ayant :
- une dispersion granulométrique d₉₀/d₁₀ comprise entre 2 et 20, préférentiellement entre 2 et 10, encore plus préférentiellement entre 2 et 5 ; et/ou
- un indice de Hausner (HR) compris entre 1,2 et 1,6 ; et/ou
- un angle d'avalanche compris entre 45° et 65°.

4. Procédé de préparation d'une poudre selon l'une quelconque des revendications 1 à 3, ledit procédé consistant en ou comprenant les étapes suivantes :
(i) Préparation de rubans d'alliage trempés, par trempe, en particulier par trempe sur roue, d'un alliage fondu coulé en ruban, ledit alliage étant tel que défini ci-dessus ;
(ii) Optionnellement, traitement thermique sous vide à une température comprise entre 1000°C et 1100°C pendant une durée comprise entre 1h et 10h, pour obtenir un alliage recuit ;
(iii) Optionnellement, décrépitation sous hydrogène du ruban d'alliage trempé obtenu à l'issue de l'étape (i), ou le cas échéant de l'alliage recuit obtenu à l'issue de l'étape (ii) par maintien du ruban à une température comprise entre 10 et 500°C, en particulier entre 200 et 500°C, sous vide primaire ou secondaire, puis mise en contact, à cette température, dudit ruban avec une atmosphère d'hydrogène, pour obtenir une poudre grossière d'alliage ;
(iv) Broyage du ruban d'alliage trempé obtenu à l'issue de l'étape (i), ou le cas échéant de l'alliage recuit obtenu à l'issue de l'étape (ii), ou le cas échéant de la poudre grossière d'alliage obtenue à l'issue de l'étape (iii), pour obtenir une poudre fine ayant une taille de particule représentée par un d₅₀ compris de 20 à 100 µm.

5. Procédé selon la revendication 4, dans lequel l'étape (iii) est suivie, et ce avant l'étape (iv), d'une étape de désorption de l'hydrogène, en particulier sous vide primaire et/ou à environ 500°C.

6. Procédé selon l'une quelconque des revendications 4 et 5, dans lequel le broyage de l'étape (iv) se fait par broyage à jet de gaz, le gaz étant de préférence un gaz inerte, notamment de l'hélium, de l'argon ou de l'azote, la pression d'entrée du gaz dans le broyeur à jet de gaz étant inférieure à 10 bar, de préférence inférieure à 5 bar, plus particulièrement inférieure à 3 bar, et notamment supérieure ou égale à 1 ou 2 bar.

7. Utilisation d'une poudre selon l'une quelconque des revendications 1 à 3 pour la fabrication d'un aimant, en particulier par fabrication additive.

8. Aimant permanent réalisé par un procédé d'impression 3D à partir d'une poudre selon l'une quelconque des revendications 1 à 3, comprenant ou constitué de grains cristallographiques d'alliage constitué de ou comprenant, les pourcentages étant en masse par rapport à la masse totale d'alliage :
- entre 27% et 35% d'au moins une terre rare choisie dans le groupe constitué de Ce, La, Nd, Pr, Dy, Tb, Gd et Ho ;
- plus de 50%, en particulier en complément à 100%, de Fe ;
- entre 0,8% et 1,2% de bore B ;
- moins de 3% d'au moins un premier élément d'addition choisi dans le groupe constitué de Co, Cu, Ga, et Al ;
- optionnellement, moins de 1% d'au moins un deuxième élément d'addition choisi dans le groupe constitué de Ti, Zr, V, Mo, et Nb ;
**caractérisé en ce que** les grains cristallographiques dudit aimant permanent ont une taille comprise entre 2 et 100 µm.

9. Aimant selon la revendication 8, ayant une coercivité supérieure à 500 kA.m⁻¹ et une rémanence supérieure à 0,5T.

10. Procédé de préparation par fabrication additive d'un aimant permanent à partir d'une poudre selon l'une quelconque des revendications 1 à 3, ledit procédé comprenant :
a) une étape de fabrication additive à partir de ladite poudre ; et
b) une étape de recuit, notamment à une température de 600 à 1100°C, en particulier pendant une durée de 1 à 10 heures, et de préférence sous pression réduite, par exemple sous vide secondaire ;
ledit aimant ayant une taille de grains cristallographiques comprise entre 2 et 100 µm.
